# FASCICULE DE BREVET EUROPEEN

(11) **EP 1 491 778 B1**
(45) Date de publication et mention de la délivrance du brevet: **07.12.2005**
(21) Numéro de dépôt: 04291551.2
(22) Date de dépôt: 18.06.2004
(51) Int. Cl.: F16B 39/10

(54) **Dispositif de fixation par vis et écrous**
Befestigungsvorrichtung durch Schrauben und Muttern
Fastening by screw and nuts

(30) Priorité: 26.06.2003 FR 0307708
(43) Date de publication de la demande: 29.12.2004
(73) Titulaire: SNECMA, 75015 Paris (FR)
(72) Inventeur: Dao, Daniel, 77176 Savigny le Temple (FR); Landragin, Eric, 75012 Paris (FR); Garcin, François, 75019 Paris (FR)
(74) Mandataire: Ramey, Daniel

(56) Documents cités:
- FR-A- 674 376
- US-A- 312 555
- US-A- 720 769
- US-A- 3 378 288
- US-A- 3 490 508

## Description

La présente invention concerne un dispositif de fixation, par vis et écrous, de deux pièces l'une sur l'autre (FR 674 376 A).

Ces dispositifs de fixation par vis et écrous, permettant notamment un assemblage de deux ou plusieurs pièces démontables, sont très répandus et connaissent des applications variées, dans tous les domaines techniques. Pour effectuer les opérations de serrage ou de desserrage d'un écrou sur une vis, il est nécessaire d'immobiliser la vis en rotation et en translation pour éviter que celle-ci tourne librement sans offrir de couple résistant au couple de serrage ou desserrage exercé sur l'écrou par un outillage approprié tel, par exemple, qu'une clef ou un appareil automatique ou semi-automatique de serrage.

Lorsque ces dispositifs sont utilisés pour l'assemblage des éléments annulaires d'un rotor de turbomachine, une solution décrite dans les documents FR-A-2 502 690 et FR-A-2 715 975 consiste à immobiliser la vis en rotation et en translation en réalisant par usinage, ou tout autre procédé de fabrication approprié, des logements et plus particulièrement des évidements dans une pièce annulaire à fixer et destinés à recevoir des têtes de vis dont les formes spécifiques coopèrent avec celles des évidements pour immobiliser les vis.

Cependant, de par la forme particulière et les tolérances dimensionnelles et de positionnement des évidements, les usinages sont difficiles et coûteux à réaliser surtout lorsqu'ils sont formés sur une pièce volumineuse, de formes complexes nécessitant de grandes précautions lors de manipulations ou lors d'opérations d'usinage. De plus, les évidements, lorsque la pièce est sollicitée mécaniquement, peuvent être à l'origine de concentrations de contraintes au sein de la pièce qui est alors affaiblie. Pour augmenter la résistance de la pièce au voisinage de ces évidements et accroître sa durée de vie, il est courant de renforcer la pièce en ajoutant autour des évidements de la matière qui finalement augmente la masse de l'ensemble. Cet excédent de masse peut devenir un inconvénient non négligeable, par exemple dans le domaine de l'aéronautique dans lequel on cherche à diminuer la masse de toute pièce embarquée ou lorsque la pièce est une pièce en mouvement dont on veut diminuer l'inertie telle, par exemple, qu'un élément de rotor de turbocompresseur ou de turboréacteur.

Un autre inconvénient de ces évidements d'immobilisation des têtes de vis est que leurs parois supportent directement le couple de serrage exercé sur l'écrou, qui, lorsqu'il dépasse une valeur limite de couple prescrit, peut marquer voir même endommager la pièce dans laquelle sont formés les évidements.

Un but de l'invention est d'éviter les inconvénients précités et d'apporter une solution, techniquement simple et peu coûteuse, pour immobiliser efficacement les vis de fixation lors de l'assemblage de deux pièces.

L'invention propose à cet effet un dispositif de fixation de deux pièces l'une sur l'autre, comprenant des vis s'étendant dans des passages alignés des deux pièces, ces vis ayant des têtes appliquées sur l'une des pièces et recevant des écrous appliqués sur l'autre des pièces, et des moyens d'immobilisation des têtes de vis, ce dispositif étant caractérisé en ce que les moyens d'immobilisation des têtes de vis comprennent au moins un élément amovible qui comporte des moyens de blocage en rotation sur l'une des deux pièces à fixer.

La transposition des moyens d'immobilisation des têtes de vis sur un élément indépendant évite d'affaiblir les pièces à assembler par la formation d'évidements et préserve, par conséquent, ces pièces des marquages ou détériorations dus aux efforts exercés, lors du serrage, par les têtes de vis sur leurs moyens d'immobilisation. De plus, le ou les éléments amovibles, étant destinés uniquement à l'immobilisation des têtes de vis, peuvent être de forme générale très simple et d'encombrement réduit, les rendant facilement manipulables et simplifiant leur fabrication tout en réduisant leur coût. L'élément amovible selon l'invention est utilisable de nombreuses fois et peut-être remplacé en cas d'usure ou de détérioration anormale très facilement sans conséquence financière.

Lors du serrage des écrous sur les vis, les têtes de vis exercent sur l'élément amovible un couple tendant à l'entraîner en rotation : en prévoyant des moyens de blocage en rotation formés sur l'élément amovible, on empêche la rotation de cet élément par rapport à l'une des pièces à fixer, sans qu'il soit nécessaire d'appliquer un outillage supplémentaire d'anti-rotation à l'élément amovible, d'où une mise en oeuvre du dispositif de fixation selon l'invention plus simple et plus rapide.

Avantageusement, l'élément amovible est bloqué en rotation par butée sur une partie de la pièce à fixer. Le blocage par butée permet de réaliser simplement et efficacement la fonction anti-rotation de l'élément amovible sur l'un des éléments à fixer. En particulier, l'étendue des surfaces de contact et un éventuel traitement de durcissement permettent d'obtenir une butée très rigide et très résistante.

Une autre caractéristique avantageuse de l'invention consiste à réaliser le blocage en rotation de l'élément amovible simplement par engagement de cet élément amovible sur au moins deux vis voisines de fixation de deux pièces.

Avantageusement, le ou chaque élément amovible comprend, formé dans l'un de ses rebords, au moins un évidement d'engagement sur une tête de vis. Cet évidement est en forme de « U », il est facilement réalisable par usinage et il a une forme conjuguée de celle de la tête d'une vis pour l'immobiliser, la vis pouvant être une vis standard à tête, par exemple, de forme carrée qui n'a pas besoin d'être usinée.

Dans un mode de réalisation préféré de l'invention, le ou chaque élément amovible a une section en « L », dont une aile, formant un rebord, comporte un ou plusieurs évidements précités et dont l'autre aile forme une butée sur l'une des pièces, définissant une position pour laquelle le ou chaque évidement est engagé sur une tête de vis. Lors de l'engagement de l'élément amovible sur les têtes de vis, la butée permet de trouver immédiatement et sans erreur possible la position dans laquelle les têtes de vis et l'élément amovible sont bloqués en rotation sur l'une des pièces à fixer. Cette forme particulière en « L » de l'élément amovible permet de regrouper efficacement et par une réalisation simple l'ensemble des moyens nécessaires à l'immobilisation des têtes de vis.

En pratique, une translation perpendiculaire aux axes des vis permet d'engager l'élément amovible autour des têtes de vis pour leur blocage en rotation.

Avantageusement, quand les pièces à assembler sont annulaires, le dispositif comprend plusieurs éléments indépendants amovibles répartis sur une circonférence. Chacun de ces éléments indépendants peut être de forme très simple et de dimensions très réduites et, par conséquent, facilement réalisable et surtout facilement manipulable, simplifiant considérablement la mise en oeuvre du dispositif selon l'invention.

Selon d'autres caractéristiques de l'invention :
- le ou chaque élément amovible comprend, formé dans l'un de ses rebords, au moins deux évidements d'engagement sur des têtes de vis ;
- l'aile précitée, formant butée, forme également les moyens de blocage en rotation de l'élément amovible ;
- le ou chaque évidement est ouvert d'une part sur la surface d'extrémité du rebord opposée à l'aile formant butée et d'autre part sur la surface latérale du rebord du côté de l'aile formant butée.
- le ou chaque évidement d'engagement est fermé du côté de la surface latérale du rebord opposée à l'aile formant une butée de positionnement, pour former une butée axiale pouvant contacter une tête de vis ;
- le ou chaque évidement d'engagement est une échancrure s'étendant depuis l'extrémité libre du rebord dans lequel elle est formée.

Dans des applications préférées de l'invention :
- les deux pièces sont des pièces annulaires, en particulier pour des rotors de turbomachines ;
- au moins l'une des deux pièces annulaires précitée est un disque de rotor.

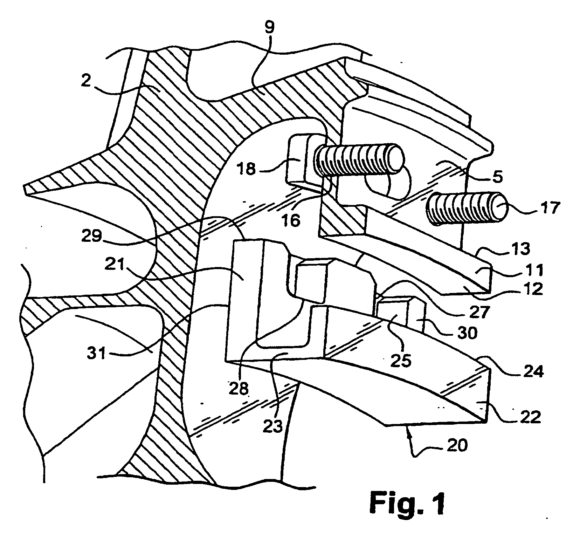

L'invention sera mieux comprise et d'autres caractéristiques, détails et avantages de celle-ci apparaîtront plus clairement à la lecture de la description qui suit, faite à titre d'exemple en référence aux dessins annexés, dans lesquels les figures 1 à 4 sont des vues schématiques en perspective d'un mode de réalisation du dispositif selon l'invention représenté dans quatre étapes successives de fixation de deux pièces.

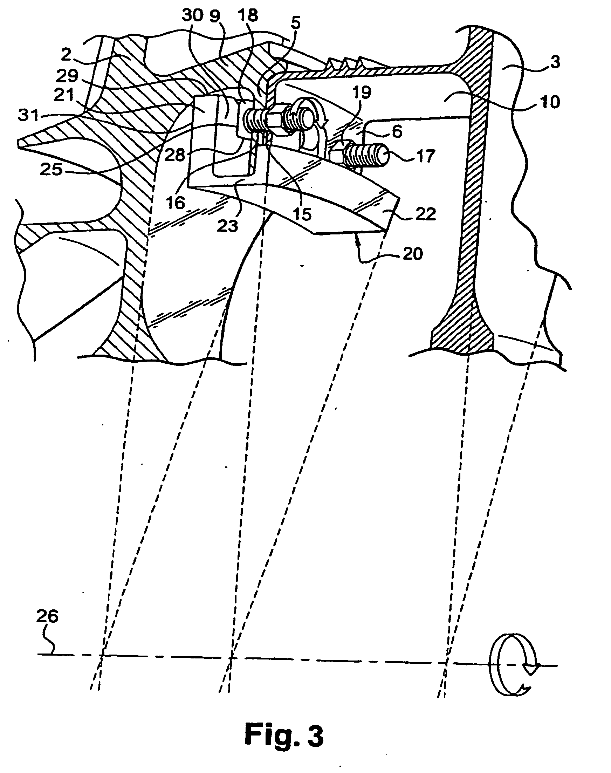

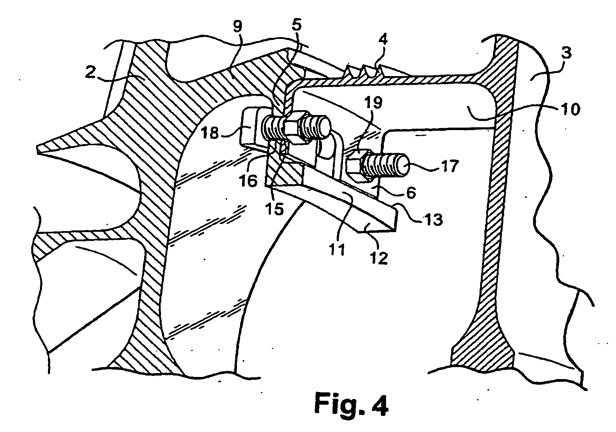

Le dispositif selon l'invention est dans cet exemple utilisé pour assembler deux pièces annulaires 2, 3 d'un rotor de turbocompresseur. La première de ces pièces est un disque de rotor 2 et l'autre une pièce annulaire formant une entretoise 3 comportant notamment des collerettes 4 pour coopérer avec des aubes de stator (non représentées) et former un joint d'étanchéité par chicane. Les deux éléments annulaires 2, 3 sont placés axialement bout à bout et comportent respectivement une bride annulaire 5 et des pattes de bridages 6 (voir figures 3 et 4) qui s'étendent radialement vers l'intérieur. Une paroi cylindrique 9 portant la bride annulaire 5 s'étend autour de l'axe 26 du disque de rotor 2 (figure 3) et une paroi cylindrique 10 portant les pattes 6 s'étend depuis la pièce entretoise 3. Bien que les figures 1 à 4 ne représentent qu'un secteur angulaire des deux pièces annulaires 2, 3, les pattes 6 sont réparties régulièrement sur toute la périphérie radialement interne de la paroi cylindrique 10. Un rebord annulaire 11 (figures 1 et 4) est formé sur la périphérie radialement interne 12 de la bride annulaire 5 et fait saillie du côté de l'entretoise 3. Les pattes 6 s'étendent radialement jusqu'au voisinage du rebord annulaire 11 tout en préservant un jeu entre les extrémités libres (figure 4) des pattes 6 et le rebord annulaire 11.

Des passages de vis 16, 15, répartis régulièrement sur une circonférence, sont formés d'une part dans la bride annulaire 5 et d'autre part dans les pattes 6. Les passages de vis 15 formés dans les pattes 6 sont alignés avec ceux 16 de la bride annulaire 5 et sont destinés à recevoir des vis de fixation 17 standard ayant des têtes 18 carrées qui sont appliquées sur la bride annulaire 5 du côté opposé à l'entretoise 3. Des écrous 19 sont vissés sur les tiges filetées des vis 17 et appliqués contre les pattes 6 du côté opposé au disque de rotor 2.

Les moyens d'immobilisation des têtes des deux vis représentées aux dessins comprennent un élément amovible 20 qui a sensiblement la forme d'un secteur annulaire et qui comprend deux parois parallèles 21, 22 reliées par une troisième paroi 23, perpendiculaire aux deux premières, en partie de cylindre. La première paroi 21 et la troisième paroi 23 donnent une forme générale en « L » à la section de l'élément amovible 20. Des évidements 25, de forme sensiblement carrée ou rectangulaire conjuguée de la forme carrée des têtes de vis 18, sont formés dans la première paroi latérale 21 et débouchent radialement sur la surface d'extrémité 29, de la paroi 21, opposée à la paroi 23 et axialement sur la surface latérale 30, de la paroi 21, faisant face à la deuxième paroi 22. Ces évidements 25 sont fermés du côté de la surface latérale 31, de la paroi 21, opposée à la deuxième paroi 22 pour former une butée axiale 27 d'une tête de vis 18.

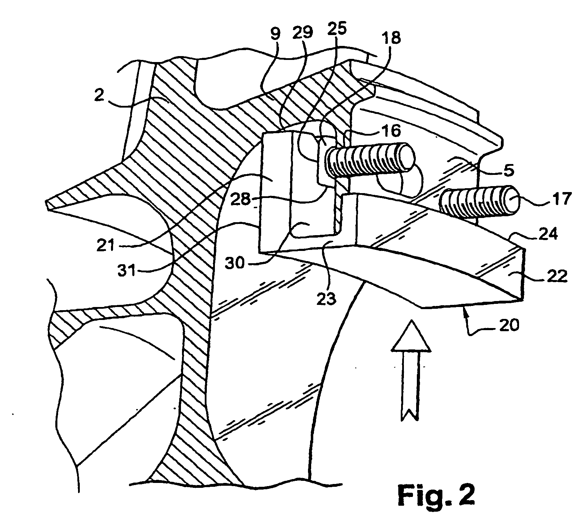

Lorsqu'il est engagé entre la bride annulaire 5 et le corps du disque de rotor 2 comme représenté aux dessins des figures 2 et 3, l'élément 20, est coaxial aux deux pièces annulaires 2, 3 ( figure 3 ) et la paroi 23 est en butée sur la périphérie radialement interne 12 de la bride annulaire 5. Cette butée définit une position pour laquelle les têtes de vis 18 sont engagées dans les évidements 25 et immobilisées en rotation dans ces évidements. Les têtes de vis sont également immobilisées en translation entre la butée axiale 27 de chaque évidement 25 et la bride annulaire 5. La butée de la paroi 23 de l'élément 20 sur la bride annulaire 5 permet également de bloquer en rotation l'élément amovible 20 par rapport au disque de rotor 2. L'engagement des deux têtes de vis 18 dans les évidements 25 permet à celles-ci de contacter la surface de fond 28, sensiblement parallèle au plan passant par les axes des deux vis 17 voisines, de chaque évidement 25 pour également empêcher la rotation de l'élément amovible 20. La première paroi latérale 21 de l'élément 20 s'étend le long de la bride annulaire 5 du côté opposé à l'entretoise 3 et la deuxième paroi latérale 22 s'étend le long du rebord 11 jusqu'au voisinage de sa surface cylindrique externe 13 tout en préservant un jeu entre l'extrémité libre 24 de cette deuxième paroi 22 et l'extrémité libre 14 des pattes 6.

Bien que sur les figures 1 à 4 un seul élément amovible 20 soit représenté, il y a autant d'éléments amovibles 20 indépendants répartis en cercle le long de la bride annulaire 5 que nécessaire pour immobiliser toutes les têtes de vis 18.

Les différentes étapes de l'assemblage des deux pièces annulaires 2, 3 par mise en oeuvre du dispositif de fixation selon l'invention précédemment décrit sont représentées successivement aux figures 1 à 4. Dans un premier temps (figure 1), les vis de fixation 17 sont engagées dans les passages de vis 15 de la bride annulaire 5 jusqu'à ce que les têtes de vis 18 soient au contact de cette bride 5. Dans une deuxième étape représentée en figure 2, les éléments amovibles 20 sont amenés sur la bride annulaire 5 par un mouvement de translation sensiblement radiale par rapport à l'axe 26. Pour chaque élément amovible 20, la translation est poursuivie jusqu'à ce que la paroi 23 vienne en butée sur la périphérie radialement interne 12 de la bride annulaire 5, les têtes de vis 18 sont alors engagées dans les évidements 25 et immobilisées aussi bien en rotation qu'en translation, et l'élément amovible 20 est bloqué en rotation par rapport au disque de rotor 2. Dans une troisième étape représentée en figure 3, la pièce annulaire formant entretoise 3 est placée axialement en bout du disque de rotor 2 pour que les tiges des vis 17 soient engagées dans les passages 15 des pattes de bridage 6. Un ou plusieurs écrous 19 sont ensuite engagés et vissés sur la tige filetée de chaque vis 17 puis serrés au couple prescrit contre la patte de bridage 6 correspondante ou contre une rondelle de serrage placée entre chaque écrou 19 et la patte de bridage 6. L'assemblage des deux pièces 2, 3 annulaires achevé (figure 4), les éléments amovibles 20 sont retirés et peuvent être utilisés pour l'assemblage de deux autres pièces.

En variante, les deux pièces annulaires 2, 3 sont d'abord placées bout à bout et indexées angulairement pour que les passages de vis 15, 16 des deux pièces annulaires 2,3 soient alignés. Les vis 17 sont ensuite engagées dans les passages de vis 15, 16 alignés. Les éléments amovibles 20 sont engagés sur les têtes de vis 18 pour les immobiliser lors du vissage des écrous 19 sur les vis 17 et de leur serrage contre les pattes de bridage 6.

Pour désolidariser les deux pièces annulaires 2, 3, les éléments amovibles 20 peuvent être appliqués sur les têtes de vis pour les immobiliser lors du desserrage et dévissage des écrous 18. Les étapes permettant de désolidariser les deux éléments 2, 3 sont alors représentées successivement sur les figures 4 à 1.

Dans une variante de réalisation les évidements 25 de l'élément amovible 20 traversent de part en part, dans son épaisseur, la paroi latérale 21 pour former des échancrures s'étendant depuis l'extrémité libre de la paroi latérale 21. La butée axiale précitée permettant de contacter avec les têtes de vis est alors formée par une partie de la pièce annulaire 2 à assembler.

## Revendications

1. Dispositif de fixation de deux pièces (2, 3) l'une sur l'autre, comprenant des vis de fixation (17) s'étendant dans des passages alignés (15, 16) des deux pièces (2, 3), ces vis ayant des têtes (18) appliquées sur l'une (2) des pièces et recevant des écrous (19) appliqués sur l'autre (3) des pièces, et des moyens d'immobilisation (25) des têtes de vis (18), **caractérisé en ce que** les moyens d'immobilisation des têtes de vis (18) comprennent au moins un élément amovible (20) engageable sur au moins une tête de vis par une translation perpendiculaire à l'axe de la vis et comportant des moyens de blocage (23, 28) en rotation sur l'une (2) des deux pièces à fixer.

2. Dispositif de fixation selon la revendication 1, **caractérisé en ce que** les moyens de blocage (23, 28) de l'élément amovible (20) comprennent des moyens de blocage par butée (23) sur une partie (11) de la pièce (2) à fixer.

3. Dispositif de fixation selon la revendication 1 ou 2, **caractérisé en ce que** l'élément amovible (20) est bloqué en rotation par engagement sur au moins deux vis (17) voisines de fixation des deux pièces.

4. Dispositif de fixation selon la revendication 1 ou 2, **caractérisé en ce que** le ou chaque élément amovible (20) comprend au moins un évidement (25) d'engagement sur une tête de vis (18).

5. Dispositif de fixation selon la revendication 3, **caractérisé en ce que** le ou chaque élément amovible (20) comprend au moins deux évidements (25) d'engagement sur des têtes de vis (18).

6. Dispositif de fixation selon la revendication 4 ou 5, **caractérisé en ce que** le ou chaque évidement (25) a une forme en U conjuguée de la tête de vis (18) à immobiliser en rotation.

7. Dispositif de fixation selon l'une des revendications précédentes, **caractérisé en ce que** le ou chaque élément amovible (20) a une section en « L » et comprend une aile (21) qui comporte au moins un évidement d'engagement (25) sur une tête de vis et une autre aile (23) qui forme une butée sur l'une (2) des pièces, en définissant une position pour laquelle le ou chaque évidement (25) est engagé sur une tête de vis (18).

8. Dispositif de fixation selon la revendication 7, **caractérisé en ce que** l'autre aile (23), formant butée, forme également les moyens de blocage en rotation de l'élément amovible.

9. Dispositif de fixation selon la revendication 7, **caractérisé en ce que** le ou chaque évidement d'engagement (25) débouche d'une part à l'extrémité (29) de la première aile (21) citée, du côté opposé à l'autre aile (23) formant butée et d'autre part sur la surface latérale (30) de la première aile (21), du côté de l'autre aile (23) formant butée.

10. Dispositif de fixation selon la revendication 7, **caractérisé en ce que** le ou chaque évidement d'engagement (25) est fermé du côté de la surface latérale (31) de la première aile (21), opposée à l'autre aile (23), pour former une butée axiale d'une tête de vis (18).

11. Dispositif de fixation selon l'une des revendications 4 à 9, **caractérisé en ce que** le ou chaque évidement d'engagement (25) est une échancrure traversant la partie de l'élément amovible (20) dans laquelle elle est formée selon un axe parallèle à celui des vis de fixation (17) et dans les deux sens.

12. Dispositif de fixation selon l'une des revendications précédentes, **caractérisé en ce que** les deux pièces (2, 3) sont des pièces annulaires, en particulier pour des rotors de turbomachines.

13. Dispositif de fixation selon la revendication 12, **caractérisé en ce qu'**au moins l'une des deux pièces annulaires (2, 3) est un disque de rotor.

14. Dispositif de fixation la revendication 12 ou 13, **caractérisé en ce qu'**il comprend plusieurs éléments indépendants amovibles (20) répartis sur une circonférence.

## Patentansprüche

1. Vorrichtung zum Fixieren zweier Teile (2,3) aneinander, umfassend: Fixier-Schrauben (17), welche sich in ausgerichteten Durchgängen (15, 16) der zwei Teile (2,3) erstrecken, wobei diese Schrauben Köpfe (18) aufweisen, welche auf dem einen (2) der Teile appliziert werden, und Schraubenmuttern (19) aufnehmen, welche auf dem anderen (3) der Teile appliziert werden, und Vorrichtungen (25) zum Immobilisieren der Schrauben-Köpfe (18), **dadurch gekennzeichnet, dass** die Vorrichtungen zum Immobilisieren der Schrauben-Köpfe (18) wenigstens ein abnehmbares Element (20) umfassen, welches durch eine Translation senkrecht zur Achse der Schraube an wenigstens einem Schrauben-Kopf angreifen kann, und Vorrichtungen (23, 28) zum Rotations-Blockieren an einem (2) der zwei zu fixierenden Teile umfasst.

2. Fixier-Vorrichtung gemäß Anspruch 1, **dadurch gekennzeichnet, dass** die Blockier-Vorrichtungen (23, 28) des abnehmbaren Elements (20) Vorrichtungen zum Blockieren mittels Andruck (23) an eine Partie (11) des zu fixierenden Teils (2) umfassen.

3. Fixier-Vorrichtung gemäß Anspruch 1 oder 2, **dadurch gekennzeichnet, dass** das abnehmbare Element (20) durch Angreifen an wenigstens zwei benachbarten Fixier-Schrauben (17) der zwei Teile gegenüber Rotation blockiert ist.

4. Fixier-Vorrichtung gemäß Anspruch 1 oder 2, **dadurch gekennzeichnet, dass** das oder jedes abnehmbare Element (20) wenigstens eine Aussparung (25) zum Angreifen an einem Schrauben-Kopf (18) umfasst.

5. Fixier-Vorrichtung gemäß Anspruch 3, **dadurch gekennzeichnet, dass** das oder jedes abnehmbare Element (20) wenigstens zwei Aussparungen (25) zum Angreifen an SchraubenKöpfen (18) umfasst.

6. Fixier-Vorrichtung gemäß Anspruch 4 oder 5, **dadurch gekennzeichnet, dass** die oder jede Aussparung (25) eine dem gegenüber Rotation zu immobilisierenden Schrauben-Kopf (18) zugeordnete U-Form aufweist.

7. Fixier-Vorrichtung gemäß einem der vorhergehenden Ansprüche, **dadurch gekennzeichnet, dass** das oder jedes abnehmbare Element (20) einen "L"-förmigen Querschnitt aufweist, und einen Flügel (21) umfasst, welcher wenigstens eine Aussparung (25) zum Angreifen an einem Schrauben-Kopf umfasst, und einen anderen Flügel (23) umfasst, welcher einen Anschlag an einem (2) der Teile bildet, wobei eine Position definiert wird, bei welcher die oder jede Aussparung (25) an einem Schrauben-Kopf (18) angreift.

8. Fixier-Vorrichtung gemäß Anspruch 7, **dadurch gekennzeichnet, dass** der andere, Anschlag-bildende Flügel (23) gleichermaßen die Vorrichtungen zum Rotations-Blockieren des abnehmbaren Elements bildet.

9. Fixier-Vorrichtung gemäß Anspruch 7, **dadurch gekennzeichnet, dass** die oder jede Angreif-Aussparung (25) einerseits von der dem anderen, Anschlag-bildenden Flügel (23) gegenüberliegenden Seite aus, an dem Ende (29) des genannten ersten Flügels (21) einmündet, und andererseits an der SeitenFläche (30) des ersten Flügels (21), von der Seite des anderen, Anschlag-bildenden Flügels (23) aus einmündet.

10. Fixier-Vorrichtung gemäß Anspruch 7, **dadurch gekennzeichnet, dass** die oder jede Angreif-Aussparung (25) an der dem anderen Flügel (23) gegenüberliegenden Seite der Seitenfläche (31) des ersten Flügels (21) geschlossen ist, um einen axialen Anschlag eines Schrauben-Kopfes (18) zu bilden.

11. Fixier-Vorrichtung gemäß einem der Ansprüche 4 bis 9, **dadurch gekennzeichnet, dass** die oder jede Angreif-Aussparung (25) eine Ausnehmung ist, welche diejenige Partie des abnehmbaren Elements (20), in welchem sie ausgebildet ist, entlang einer Achse quert, welche zu derjenigen der Fixier-Schrauben (17) parallel ist, und in den zwei Sinnen.

12. Fixier-Vorrichtung gemäß einem der vorhergehenden Ansprüche, **dadurch gekennzeichnet, dass** die zwei Teile (2,3) ringförmige Teile sind, insbesondere für Turbinen-Rotoren.

13. Fixier-Vorrichtung gemäß Anspruch 12, **dadurch gekennzeichnet, dass** wenigstens eine der zwei ringförmigen Teile (2,3) eine Rotor-Scheibe ist.

14. Fixier-Vorrichtung gemäß Anspruch 12 oder 13, **dadurch gekennzeichnet, dass** sie mehrere unabhängige, entlang einem Umfang verteilte abnehmbare Elemente (20) aufweist.

## Claims

1. A device for fastening two parts (2, 3) together, comprising fastening screws (17) extending along aligned passages (15, 16) in the two parts (2, 3), these screws having heads (18) pressed against one of the parts (2) and receiving nuts (19) pressed against the other one of the parts (3), and means (25) for preventing the screw heads (18) from moving, **characterized in that** the means for preventing the screw heads (18) from moving comprise at least one removable element (20) which is able to be engaged on at least one screw heads by being moved in translation perpendicularly to the axis of the screw and including means (23, 28) for preventing rotation relative to one (2) of the two parts for fastening together.

2. Fastening means according to claim 1, **characterized in that** the rotation-preventing means (23, 28) of the removable element (20) comprise means for preventing movement by abutment (23) against a portion (11) of the part (2) for fastening.

3. A fastening device according to claim 1 or claim 2, **characterized in that** the removable element (20) is prevented from rotating by engaging on at least two adjacent screws (17) for fastening two parts together.

4. A fastening device according to claim 1 or claim 2, **characterized in that** the or each removable element (20) includes at least one recess (25) for engaging on a screw head (18).

5. A fastening device according to claim 3, **characterized in that** the or each removable element (20) includes at least two recesses (25) for engaging on screw heads (18).

6. A fastening device according to claim 4 or claim 5, **characterized in that** the or each recess (25) is of a U-shape complementary to the screw head (18) to be prevented from rotating.

7. A fastening device according to any preceding claim, **characterized in that** the or each removable element (20) is of L-shape section and comprises one limb (21) which includes at least one recess (25) for engagement on a screw head, and another limb (23) which forms an abutment against one of the parts (2), defining a position in which the or each recess (25) is engaged on a screw head (18).

8. A fastening device according to claim 7, **characterized in that** the other abutment-forming limb (23) also forms means for preventing the removable element from moving in rotation.

9. A fastening device according to claim 7, **characterized in that** the or each engaging recess (25) opens out firstly to the end (29) of the first cited limb (21), in the opposite direction of the other abutment-forming limb (23), and secondly in the side surface (30) of the first limb (21), in the direction of the other abutment-forming limb (23).

10. A fastening device according to claim 7, **characterized in that** the or each engagement recess (25) is closed beside the side surface (31) of the first limb (21) that faces away from the other limb (23) so as to form an axial abutment for a screw head (18).

11. A fastening device according to any one of claims 4 to 9, **characterized in that** the or each engagement recess (25) is a notch passing through the portion of the removable element (20) in which it is formed, along an axis parallel to the axes of the fastening screws (17) and in both directions.

12. A fastening device according to any preceding claim, **characterized in that** the two parts (2, 3) are annular parts, in particular for turbomachine rotors.

13. A fastening device according to claim 12, **characterized in that** at least one of the two annular parts (2, 3) is a rotor disk.

14. A fastening device according to claim 12 or claim 13, **characterized in that** it comprises a plurality of independent removable elements (20) distributed around a circumference.
